# EUROPÄISCHE PATENTSCHRIFT

(11) **EP 1 464 863 B1**
(45) Veröffentlichungstag und Bekanntmachung des Hinweises auf die Patenterteilung: **05.11.2008**
(21) Anmeldenummer: 04101271.7
(22) Anmeldetag: 26.03.2004
(51) Int. Cl.: F16D 55/00, F16D 55/227

(54) **Bremshalter für eine Teilbelagscheibenbremse**
Brake support for a spot type disc brake.
Support de frein pour freins à disque à garniture partielle.

(30) Priorität: 31.03.2003 DE 10314437
(43) Veröffentlichungstag der Anmeldung: 06.10.2004
(73) Patentinhaber: Continental Teves AG & Co. oHG, 60488 Frankfurt am Main (DE)
(72) Erfinder: Metzen, Hans-Peter, 61352, Bad Homburg (DE); Bungert, Hans, 65366, Geisenheim (DE); van Aken, Volker, 60325, Frankfurt am Main (DE); Sundheim, Ralf, 60316, Frankfurt am Main (DE)

(56) Entgegenhaltungen:
- DE-A- 4 036 272
- US-A- 4 465 163
- US-A- 4 993 519
- US-A- 5 564 532
- US-A- 5 706 916

## Beschreibung

Die Erfindung betrifft einen Bremshalter für eine Teilbelagscheibenbremse, die einen fahrzeugfest angeordneten Bremshalter und ein eine Bremsscheibe sowie beiderseits der Bremsscheibe positionierte Bremsbeläge umgreifendes Bremsgehäuse aufweist. Bremshalter für derartige Teilbelagscheibenbremsen sind üblicherweise entweder in einen Radträger bzw. Achsschenkel eines Kraftfahrzeuges integriert oder aber an diesem befestigt. Gattungsgemäße Bremshalter sind in einer Vielzahl von Ausführungsformen bekannt.

So offenbart die DE 101 08 521 A1 eine Schwimmsattel-Scheibenbremse, die einen Bremshalter aufweist, der die Bremsscheibe axial überragende Bremshalterarme besitzt. Dabei sind an den Bremshalterarmen Führungsabschnitte vorgesehen, an denen die beiden Bremsbeläge axial verschiebbar abgestützt und geführt werden. Im einzelnen greifen die Bremsbeläge mit in Umfangsrichtung seitlichen Tragteilen formschlüssig in die Führungsabschnitte der Bremshalterarme ein, so dass die von den Bremsbelägen aufgenommenen Reibkräfte auf die Bremshalterarme übertragen werden können. Insbesondere bei hohen Bremsanlegekräften kommt es dabei zu einer nicht unerheblichen elastischen Verformung der Bremshalterarme in Umfangsrichtung, die sich aufgrund der Hebelarme am axial äußeren Ende der Bremshalterarme besonders stark auswirkt. Die sich daraus ergebende Schiefstellung der Bremshalterarme in Umfangsrichtung wirkt sich über die Bremsbeläge auch auf das Gehäuse aus und führt damit zu einer unerwünschten Schiefstellung des Bremsgehäuses sowie der beiden Bremsbeläge. Der daraus resultierende Schrägverschleiß an den Bremsbelägen bewirkt neben einer Verschlechterung der Funktion auch eine Verschlechterung des Komfortverhaltens der Bremse. Insbesondere ist die Scheibenbremse bei Schrägverschleiß empfindlicher für die Entstehung von Bremsgeräuschen.

In diesem Zusammenhang sind aus dem Stand der Technik bereits Versuche bekannt, durch Maßnahmen am Bremshalter die Schiefstellung des Bremsgehäuses insbesondere der Bremshalterarme zu verhindern bzw. zu reduzieren. Beispielsweise wurde bei dem in der DE 196 50 425 A1 beschriebenen Bremshalter die Elastizität der bremshalterseitigen Belagabstützung des inneren Bremsbelages gesteigert, indem die Materialsteifigkeit des Bremshalterarmes in Umfangsrichtung an der axial inneren Belagabstützung gezielt herabgesetzt wurde. Daraus ergibt sich für den inneren wie für den äußeren Bremsbelag eine in Umfangsrichtung annähernd gleiche elastische Abstützung am Bremshalterarm und daher eine fast gleiche elastische Verformung der Bremshalterarme bei Bremseneingriff. Als Ergebnis dieser Maßnahme wurde eine ganz erhebliche Reduzierung der Gehäuseschiefstellung erwartet. Allerdings besitzt der bekannte Bremshalter eine relativ komplizierte Formgebung und ist daher im Gießverfahren nicht ohne Schwierigkeiten herzustellen. Ferner ergibt sich durch die lokal reduzierte Materialsteifigkeit am Bremshalter zumindest teilweise eine größere Bremshalterverformung unter Last.

Der DE 35 40 810 C1 ist außerdem eine Schwimmsattel-Scheibenbremse mit einem zugehörigen Bremshalter zu entnehmen, bei der zur Reduzierung von unerwünschtem Schrägverschleiß an den Bremsbelägen sowohl für den Bremshalter als auch für den Schwimmsattel eine rahmenförmige Struktur vorgeschlagen wird. Zusätzlich sind der Bremshalter und der Schwimmsattel entsprechend der auftretenden Belastungen gezielt asymmetrisch gestaltet. Daraus ergibt sich durch Kombination von Bremshalter und Schwimmsattel für die gesamte Bremse eine Bauform von hoher Steifigkeit. Dies geht einher mit hohem Materialaufwand und gleichfalls hohem Gewicht für eine solche Anordnung.

Ausgehend davon besteht die Aufgabe der vorliegenden Erfindung darin einen einfach aufgebauten Bremshalter anzugeben, bei welchem selbst bei hohen Bremsumfangskräften eine Schiefstellung der Bremsbeläge sowie des Bremsgehäuses weitgehend unterbunden wird.

Gelöst wird die Aufgabe durch einen Bremshalter für eine Teilbelagscheibenbremse nach den Merkmalen des Patentanspruchs 1. Danach ist der Bremshalter Bestandteil einer Teilbelagscheibenbremse, die außerdem beiderseits einer zugehörigen Bremsscheibe angeordnete Bremsbeläge und zumindest ein die Bremsscheibe sowie die Bremsbeläge umgreifendes Bremsgehäuse aufweist. Der im montierten Zustand fahrzeugfest angeordnete Bremshalter besitzt einen Basisabschnitt, mit mindestens zwei Befestigungsbereichen zur lösbaren fahrzeugfesten Befestigung des Bremshalters, und wenigstens zwei im wesentlichen rechtwinklig zum Basisabschnitt verlaufenden Bremshalterarme, zur verschiebbaren Aufnahme von Bremsbelägen der Teilbelagscheibenbremse. Dabei erfolgt die fahrzeugfeste Bremshalterbefestigung vorzugsweise mittels Verschraubung am Radträger bzw. Achsschenkel oder auf andere geeignete Weise, um den Bremshalter lösbar sowie fahrzeugfest zu fixieren. Die Bremshalterarme überragen im einzelnen axial den Rand einer zugehörigen Bremsscheibe und dienen der Bremsbelagführung und- abstützung. In Abstand zum Basisabschnitt, vorzugsweise an den dem Basisabschnitt abgewandten Enden, sind zumindest zwei Bremshalterarme durch wenigstens einen Steg miteinander verbunden und bewirken damit eine Erhöhung der Steifigkeit der Bremshalterarme. An demjenigen Ende der Bremshalterarme, das mit dem Basisabschnitt verbunden ist, weist der Basisabschnitt zwischen zumindest zwei Befestigungsbereichen einen Freiraum auf, so dass der Basisabschnitt zusammen mit den Bremshalterarmen und dem Steg eine offene Rahmenstruktur bildet. Damit sind zumindest zwei Befestigungsbereiche, zwischen denen sich der Freiraum erstreckt, ausschließlich über die Bremshalterarme sowie dem Steg miteinander verbunden. Unmittelbar zwischen den Befestigungsbereichen besteht keine direkt Materialverbindung. Diese offene Rahmenstruktur des Bremshalters bewirkt zunächst eine Erhöhung der Steifigkeit sowie eine Reduzierung der Schiefstellung der Bremshalterarme unter Bremsumfangslast. Dies wird vorteilhaft bei geringem Bremshaltergewicht erreicht. Um trotz des Freiraums für den fahrzeugfest montierten Bremshalter eine ausreichend steife Struktur zu erzielen, wird auf die vorhandene Steifigkeit des fahrzeugfesten Verbindungsbauteils, beispielsweise des Radträgers oder des Achsschenkel, zurückgegriffen. Weiterhin wird durch die erfindungsgemäße Gestaltung des Bremshalters selbst bei hohen Bremsumfangskräften eine weitgehend parallele Belagführung gestattet. Hierdurch wird nicht nur eine Schrägstellung der Beläge und damit deren schräger Verschleiß weitgehend vermieden. Es werden auch erhebliche Vorteile hinsichtlich der Bildung von Geräuschen und Schwingungen während des Bremsvorganges aber auch außerhalb dieses Vorgangs erreicht. Grundsätzlich erstreckt sich der erfindungsgemäße Lösungsansatz sowohl auf Bremshalterausführungen mit genau zwei Bremshalterarmen als auch auf solche mit drei oder mehr Bremshalterarmen wobei gegebenenfalls auch mehr als ein Bremsgehäuse zum Einsatz kommen kann. Gleichfalls sind auch mehr als zwei Befestigungsbereiche möglich. Dabei müssen nicht notwendigerweise zwischen allen Befestigungsbereichen Freiräume ausgebildet sein. Beispielsweise können bei mehreren Befestigungsbereichen jeweils nur zwei benachbarten Befestigungsbereiche mit einem dazwischenliegenden Freiraum versehen sein. Weiterhin kann es bei Bauformen mit drei oder mehr Bremshalterarmen je nach Anwendungsfall sinnvoll sein, nicht alle, sondern nur bestimmte Bremshalterarme durch einen Steg miteinander zu verbinden. Insbesondere ist es denkbar nur jeweils benachbarte Bremshalterarme mit einem Steg zu verbinden. Eine besonders vorteilhafte Bremshaltervariante mit mehreren Bremshalterarmen sowie Befestigungsbereichen ergibt sich durch Kombination der letztgenannten Merkmale. Demnach ist es sinnvoll die einzelnen Bremshalterarme alternierend miteinander zu verbinden. D. h. zwei benachbarte Bremshalterarme die mit einem Steg verbunden sind, weisen am zugehörigen Basisabschnitt zwischen den entsprechend benachbarten Befestigungsbereichen einen Freiraum auf. Ein daran sich anschließendes Paar von Bremshalterarmen ist hingegen über einen zwischen den zugehörigen Befestigungsbereichen durchgehenden Basisabschnitt verbunden während kein zusätzlicher Verbindungssteg vorgesehen ist. Derart gestaltete Paare von Bremshalterarmen können beliebig aneinandergereiht werden.

Gemäß einer vorteilhaften Ausführung des Bremshalters insbesondere für Teilbelagscheibenbremsen zur Umsetzung hoher Bremsleistungen ist vorgesehen, dass der Bremshalter zumindest drei Bremshalterarme aufweist und dass alle Bremshalterarme in Abstand zum Basisabschnitt, vorzugsweise an den jeweils dem Basisabschnitt abgewandten Enden, durch einen Steg miteinander verbunden sind. Dadurch ergibt sich eine besonders steife Bremshalterstruktur, die nur geringe belastungsspezifische Verformungen zulässt.

Eine weitere bevorzugte Gestaltung des Bremshalter wird dadurch erreicht, dass der Bremshalter zumindest drei Befestigungsbereiche aufweist und dass jeweils zwischen zwei Befestigungsbereichen ein Freiraum ausgebildet ist. Damit wird einerseits Gewicht gespart und andererseits wird die Bremshaltersteifigkeit am Basisabschnitt gezielt reduziert, um unter Last eine möglichst parallele Verformung der Bremshalterarme zu realisieren.

Eine sinnvolle Variante des Bremshalters ergibt sich dadurch, dass die Befestigungsbereiche in einem bezogen auf die Bremsscheibenachse hinreichenden radialen Abstand unterhalb einer Verbindungslinie zwischen den beiden Bremshalterarmen angeordnet sind. Hierdurch wird unter Last eine Parallelverformung der Bremshalterarme und damit eine Beibehaltung der parallelen Bremsbelagausrichtung unterstützt.

Im einfachsten Fall kann der Steg zur Verbindung der beiden Bremshalterarme, vorzugsweise der Enden der Bremshalterarme, im wesentlichen aus balkenförmig gestaltet sein. Diesbezüglich besteht jedoch noch Weiterentwicklungspotential um den Steg entsprechend der auftretenden Belastungen auszubilden. Demzufolge kann beispielsweise an Stegbereichen mit geringerer Belastung gezielt Material entfernt werden kann, um Gewicht zu sparen. Vorteilhaft kann dabei in Weiterbildung der Erfindung der Steg bzw. Balken eine gewebeartige oder fachwerkartige Struktur annehmen, um derart eine Leichtbaukonstruktion umzusetzen. Diese Maßnahmen am Steg sollten jedoch derart ausgelegt werden, dass sich die Gesamtsteifigkeit des erfindungsgemäßen Bremshalters nicht oder nur geringfügig ändert.

Ausführungsbeispiele der Erfindung werden nachfolgend anhand der Zeichnungen erläutert.

Dabei zeigt:
- Fig. 1: eine räumliche Ansicht eines Bremshalters in einer ersten Ausführungsform,
- Fig. 2: zwei räumliche Ansichten eines Bremshalters mit Bremsgehäusen in einer zweiten Ausführungsform,
- Fig. 3: zwei räumliche Ansichten des Bremshalters aus Fig. 2.

Die in den Figuren dargestellten Bremshalter 1, 21 sind für den Einsatz in Teilbelagscheibenbremsen, insbesondere in Kraftfahrzeugen, bestimmt. Derartige Teilbelagscheibenbremsen umfassen einen fahrzeugfest montierbaren Bremshalter 1, 21 sowie zumindest ein Bremsgehäuse, das eine nicht gezeigte zugehörige Bremsscheibe und beiderseits der Bremsscheibe angeordnete Bremsbeläge sattelartig übergreift. Dabei sind die Bremsbeläge verschiebbar im Bremshalter geführt und die bei einer Bremsbetätigung an den Bremsbelägen auftretenden Bremsumfangskräfte werden ebenfalls über den Bremshalter abgeführt.

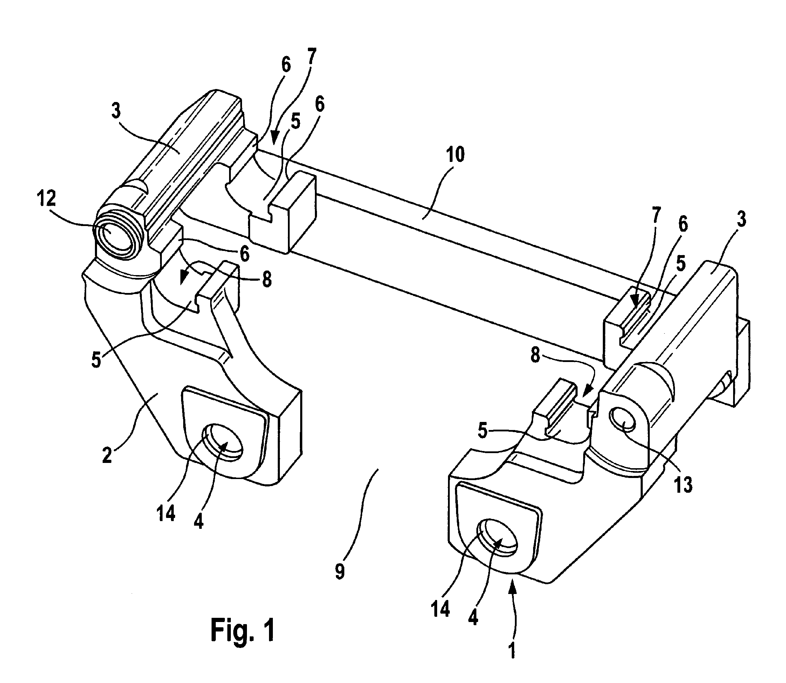

Figur 1 zeigt eine dreidimensionale Ansicht eines erfindungsgemäßen Bremshalters 1 in einer ersten Ausführungsform. Der Bremshalter 1 besitzt einen Basisabschnitt 2, der sich in Einbaulage auf einer Bremsscheibenseite im wesentlichen parallel zur Bremsscheibenreibfläche erstreckt. An den Basisabschnitt 2 schließen sich zwei Bremshalterarme 3 an, die senkrecht zum Basisabschnitt 2 verlaufen und damit bezogen auf die Bremsscheibenachse in axialer Richtung den äußeren Rand einer nicht gezeigten Bremsscheibe überragen. Der Basisabschnitt 2 weist weiterhin zwei Befestigungsbereiche 4 auf, über die sich der Bremshalter 1 lösbar an einem fahrzeugfesten Bauteil, insbesondere einem Radträger oder Achsschenkel eines Kraftfahrzeuges montieren lässt. In der konkreten Bremshaltervariante ist der Befestigungsbereich 4 mit einem Durchgangsloch 14 versehen, über das der Bremshalter 1 fahrzeugfest verschraubt werden kann. Damit kann sich der Befestigungsbereich 4 in der fahrzeugfesten Einbaulage des Bremshalters 1 unter Last zumindest geringfügig um die Achse des Durchgangslochs 14 verdrehen.

Die im Abstand voneinander angeordneten parallelen Bremshalterarme 3 sind vorzugsweise einstückig mit dem Basisabschnitt 2 verbunden und dienen, bezogen auf die Bremsscheibenachse, zur axial verschiebbaren Führung und Abstützung nicht gezeigter Bremsbeläge. Dazu sind in den Bremshalterarmen 3 jeweils axiale Führungsabschnitte 5 in Form von Nuten ausgebildet, die in radialer Richtung nach außen geöffnet sind. Die nicht gezeigten Bremsbeläge greifen mit hakenförmigen, seitlichen Tragteilen in die nutförmigen Führungsabschnitte 5 ein und ermöglichen damit die an den Bremsbelägen in Umfangsrichtung auftretende Reibungskraft auf die Bremshalterarme 3 zu übertragen. Im einzelnen wird dies durch senkrecht zur Umfangsrichtung orientierte Abstützflächen 6 innerhalb der Führungsabschnitte 5 realisiert. Die einander zu- bzw. abgewandten Abstützflächen 6 bewirken zusammen mit entsprechend orientierten Anlageflächen an den nicht gezeigten Bremsbelägen eine ziehende und/oder drückende Abstützung der beiden Bremsbeläge am Bremshalter. Idealerweise kann durch gezielte Auslegung der Toleranzfelder für die Tragteile der Bremsbeläge bzw. die Führungsabschnitte 5 erreicht werden, dass sich bei den üblicherweise im Betrieb häufig auftretenden geringen Bremsanlagekräften eine einlaufseitig ziehende Abstützung beider Bremsbeläge einstellt. Erst bei größeren Bremsanlegekräften und der Übertragung höherer Bremsleistungen erfolgt eine kombinierte ziehende wie drückende Abstützung beider Bremsbeläge am Bremshalter 1 und damit die Übertragung der Reibungskräfte auf beide Bremshalterarme 3. Die gezielte Auslegung der zugehörigen Toleranzfelder am Bremsbelag bzw. am Bremshalter ermöglicht jedoch auch die Einstellung anderer Abstützverhältnisse für den Bremsbelag. Grundsätzlich ist die erfindungsgemäße Ausbildung des Bremshalters 1 unabhängig von der jeweils vorliegenden Art der Bremsbelagabstützung an den Bremshalterarmen 3. Demgemäss ist ebenso eine alternative Ausführung der Bremshalterarme 3 denkbar, bei der die Führungsabschnitte 5 nicht nutartig gestaltet sind, sondern lediglich einander zugewandte Abstützflächen 6 aufweisen, um eine rein drückenden Abstützung beider Bremsbeläge zu erzielen. Entscheidend ist jeweils die im wesentlichen gleichmäßig parallele Verschiebung der Bremsbeläge auf beiden Bremsscheibenseiten ohne eine übermäßige Schiefstellung.

Der erfindungsgemäße Bremshalter 1 unterscheidet sich von den bekannten Bremshaltern im wesentlichen dadurch, dass der Basisabschnitt 2 in dem Bereich zwischen den Befestigungsbereichen 4 einen Freiraum 9 aufweist. Somit sind die Befestigungsbereiche 4 ausschließlich über die Bremshalterarme 3 sowie den Steg 10 mit einer Materialverbindung versehen. Da die beiden Teile des Basisabschnittes 2 nicht steif miteinander verbunden sind ergibt sich für die beiden Bremshalterarme 3 hinsichtlich ihrer Basisseite eine sehr viel größere Elastizität. Demgegenüber sind, und auch das in Abweichung zu den bekannten Bremshaltern, die beiden dem Basisabschnitt 2 abgewandten Enden der Arme 3 über einen Steg 10 miteinander einstückig verbunden. Dies erhöht die Steifigkeit des Bremshalters 1 und reduziert demzufolge dessen Verformung unter Last. Allgemein muss der Steg 10 nicht notwendigerweise an den-Enden der Bremshalterarme 3 angeordnet sein, es bietet sich jedoch eine Anordnung des Stegs 10 im Abstand vom Basisabschnitt 4 des Bremshalters 1 an. Der Bremshalter 1 bildet somit insgesamt mit dem Basisabschnitt 2, den Bremshalterarmen 3 und dem Steg 10 eine rahmenförmige Struktur, die im Bereich des Freiraums 9, d. h. zwischen den Befestigungsabschnitten 4, teilweise geöffnet ist. Diese offene Rahmenstruktur ist aufgrund ihrer Steifigkeit unempfindlich gegen Verformungen und erfordert außerdem nur ein geringes Bauteilgewicht. Durch die lösbare Befestigung des Bremshalters 1 an einem fahrzeugfesten Bauteil wird ferner unter Last auch die Steifigkeit dieses fahrzeugfesten Bauteils für die Übertragung der Bremsumgangskräfte herangezogen.

Der die Bremshalterarme 3 verbindende Steg 10 ist gemäß Ausführung nach Figur 1 einstückig an den Bremshalter 1 angeformt.

Selbstverständlich kann ein solcher Steg auch auf anderem Wege mit den Bremshalterarmen 3 verbunden werden. In einer ersten Variante weist der Steg einen im wesentlichen rechteckigen oder runden Querschnitt auf. Dieser Stegquerschnitt kann jedoch vorteilhaft an die jeweiligen Belastungen angepasst werden. Insbesondere bietet sich die Möglichkeit, aus Gewichtsgründen den Stegquerschnitt in Zonen geringerer Belastung gezielt zu reduzieren. Außerdem sind für den Steg 10 auch gewebe- oder Fachwerkartige Leichtbaustrukturen denkbar.

Die lösbare Befestigung des Bremshalters 1 mittels axialer Verschraubung an einem fahrzeugfesten Bauteil, insbesondere einem nicht gezeigten Radträger oder Achsschenkel, lässt unter Last eine zumindest geringfügige Verdrehung des Befestigungsabschnitts 4 um die Achse des Durchgangslochs 14 zu. Damit wird hinsichtlich der Verformungen bei Bremsumfangslast an einer axial inneren Bremsbelagabstützzone 8 eine Elastizität erreicht. Hierdurch wird bei auftretenden Bremsumfangkräften die gleichmäßige Parallelverschiebung der inneren und äußeren Bremsbelagabstützzonen 8, 7 an den Bremshalterarmen 3 unterstützt. Eine Schiefstellung der Bremsbeläge bei Bremsbetätigung wird somit weitgehend verhindert.

Eine weitere Maßnahme die Schiefstellung der Bremsbeläge bei Bremsbetätigung zu mindern besteht darin, die Elastizität der Bremsbelagabstützzonen zu reduzieren und damit die Steifigkeit des Bremshalters 1 zu steigern. Dies lässt sich durch starre Fixierung der Befestigungsabschnitte 4 am fahrzeugfesten Bauteil erreichen. Dazu kann man beispielsweise bei axialer Verschraubung des Bremshalters 1 gemäß Figur 1 die Verdrehbarkeit der Befestigungsabschnitte 4 gegenüber dem fahrzeugfesten Bauteil unterbinden. Eine andere Möglichkeit besteht darin, die Verschraubungsrichtung und damit die Ausrichtung der Befestigungsabschnitte 4 zu ändern. Bei, bezogen auf die Bremsscheibenachse, radialer oder tangentialer Verschraubungsausrichtung sind die Befestigungsabschnitte 4 gegenüber dem fahrzeugfesten Bauteil starr festgelegt. Dies führt zu einer erheblichen Steifigkeitserhöhung des gesamten Bremshalters 1 und gleichsam zu einer Reduzierung belastungsspezifischer Verformungen des Bremshalters 1.

Am Bremshalter 1 nach Figur 1 ist neben den Bremsbelägen auch ein nicht gezeigtes Bremsgehäuse schwimmend gelagert. Dazu sind in den Bremshalterarmen 3 axiale Löcher 12, 13 vorgesehen zur Befestigung bzw. zum Zusammenwirken mit zugehörigen Führungsbolzen, über die das Bremsgehäuse axial verschiebbar am Bremshalter angeordnet ist. Die im Abstand voneinander axial orientierten Führungsbolzen sind entweder innerhalb von Bohrungen des nicht gezeigten Bremsgehäuses befestigt und in den Löchern 12, 13 axial verschiebbar gelagert oder aber umgekehrt am Bremshalter befestigt und bezüglich des Bremsgehäuses verschiebbar gelagert. Wie bereits der Bremshalterausführung nach Figur 1 zu entnehmen ist besteht die Möglichkeit gleiche oder aber auch unterschiedlich gestaltete Führungsbolzen zu verwenden. Dementsprechend sind auch die Löcher 12, 13 gleich oder unterschiedlich gestaltet. Beispielweise kann ein zur Umfangskraftübertragung ausgelegter stabiler Tragbolzen mit einem klein dimensionierten reinen Führungsbolzen kombiniert werden. Aufgrund der Parallelverformung der Bremshalterarme ist weiterhin denkbar mehrere Tragbolzen an einem Bremshalter miteinander zu kombinieren, ohne die Leichtgängigkeit der verschiebbaren Bremsgehäuseführung zu gefährden.

Vorzugsweise sind die innerhalb der Löcher 12 und 13 angeordneten, nicht gezeigten Führungsbolzen in unmittelbarer Nähe der in Umfangsrichtung elastischen inneren Belagabstützung 8 am Bremshalter 1 positioniert. Die Anordnung der Führungsbolzen unmittelbar an der inneren Belagabstützung 8 resultiert in einer erheblichen Reduzierung der Schiefstellung des Bremsgehäuses bei Aufnahme hoher Bremsumfangskräfte durch den Bremshalter 1. Bei derartig hohen Bremsumfangskräften folgen die Löcher 12, 13 mit den Führungsbolzens unter Beibehaltung ihrer parallelen, axialen Ausrichtung der elastischen Verformung der inneren Belagabstützung 8, bezogen auf die Bremsscheibendrehrichtung, sowohl einlauf- als auch auslaufseitig. Es ergibt sich damit im wesentlichen eine Parallelverschiebung der inneren wie auch der äußeren Belagabstützung sowie der nicht dargestellten Führungsbolzen in Drehrichtung der nicht gezeigten Bremsscheibe. Eine mögliche Schiefstellung der Bremshalterarme 3 bzw. eine Schiefstellung des Bremsgehäuses kann dadurch erfolgreich vermieden bzw. in ganz erheblichem Maß reduziert werden.

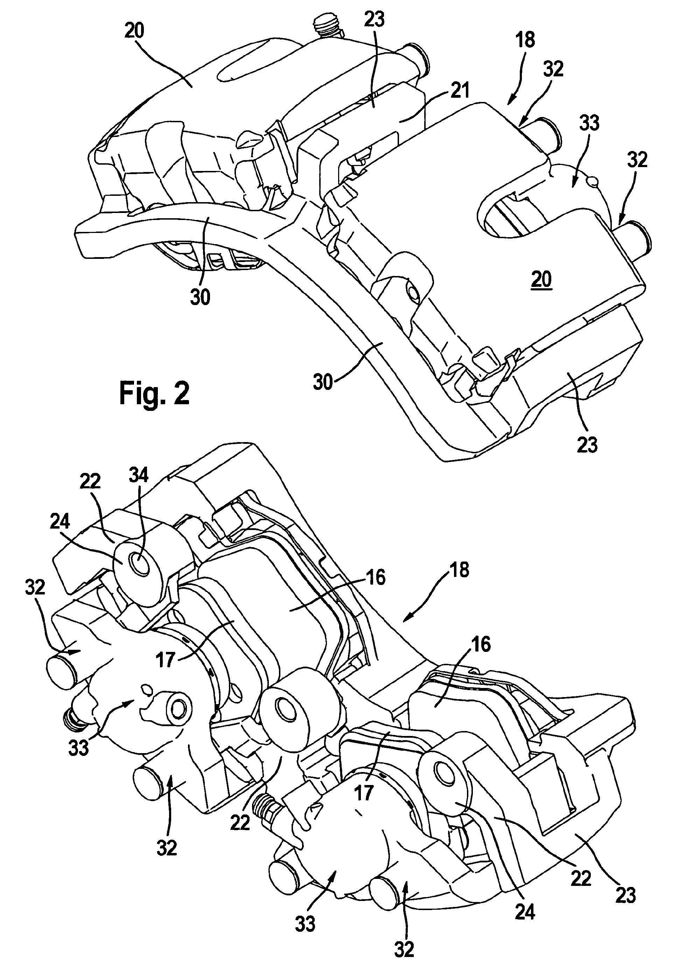

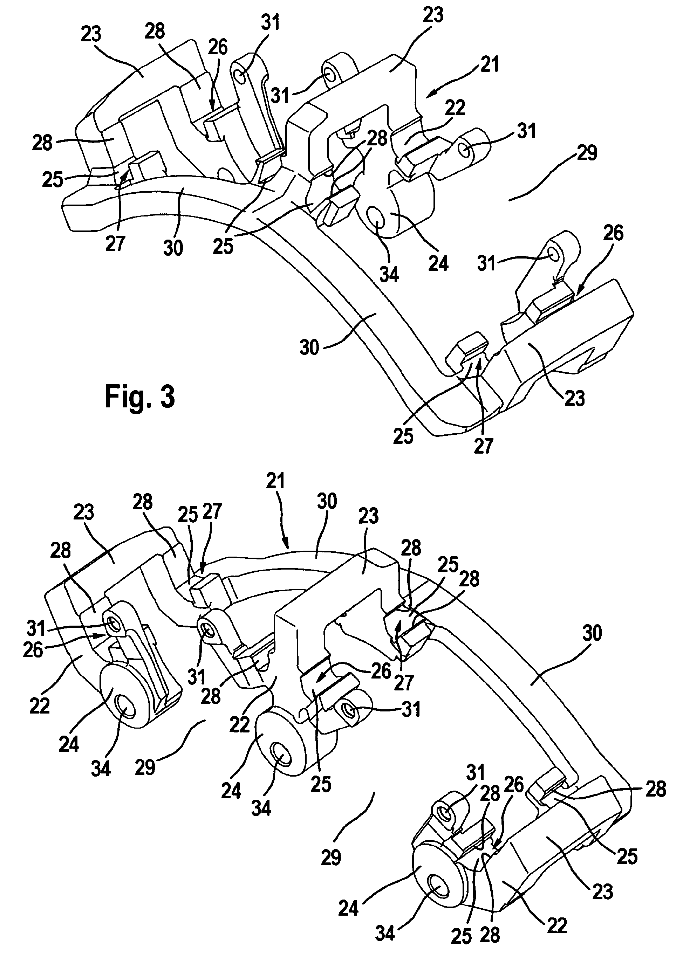

Den Figuren 2 und 3 ist eine zweite vorteilhafte Ausführung eines Bremshalters 21 zu entnehmen, wobei Figur 2 den Bremshalter 21 als Bestandteil einer vormontierten Teilbelagscheibenbremse 18 zeigt. Die Teilbelagscheibenbremse 18 ist als Schwimmsattel-Scheibenbremse ausgebildet und umfasst einen Bremshalter 21, zwei schwimmend am Bremshalter 21 gelagerte Bremsgehäuse 20 sowie jedem Bremsgehäuse 20 zugeordnete Bremsbeläge 16, 17, die in Einbaulage der Teilbelagscheibenbremse 18 in einem Kraftfahrzeug beiderseits eine nicht gezeigten zugehörigen Bremsscheibe angeordnet sind. Es handelt sich damit um eine Teilbelagscheibenbremse 18, die in der Lage ist hohe Bremsleistungen zu übertragen und demzufolge zwei Bremsgehäuse 20 besitzt.

Der Bremshalter 21 dient der Befestigung der Teilbelagscheibenbremse 18 an einem fahrzeugfesten Bauteil, insbesondere einem Radträger oder Achsschenkel. Dazu weist der Bremshalter 21 an einem auf einer Bremsscheibenseite befindlichen Basisabschnitt 22 mehrere Befestigungsbereiche 24 mit Durchgangslöchern 34 auf. Über die Durchgangslöcher 34 kann der Bremshalter 21 somit lösbar an einem fahrzeugfesten Radträger oder Achsschenkel verschraubt werden. Ausgehend vom jeweiligen Basisabschnitt 22 erstrecken sich drei Bremshalterarme 23 axial über den Rand der nicht gezeigten Bremsscheibe und verlaufen damit im wesentlichen rechtwinklig gegenüber dem Basisabschnitt 22. An jedem Bremshalterarmen sind Führungsabschnitte 25 mit axial inneren sowie äußeren Bremsbelagabstützzonen 26, 27 ausgebildet, um die beiderseits der Bremsscheibe angeordneten Bremsbeläge 16, 17 aufzunehmen. Im einzelnen sind die Bremsbeläge 16, 17 mit seitlichen Ansätzen axial verschiebbar in den Führungsabschnitten 25 geführt. Die bei Bremsbetätigung an den Bremsbelägen 16, 17 auftretenden Bremsumfangskräfte werden innerhalb der Abstützzonen 26, 27 über entsprechende Abstützflächen 28 auf den Bremshalter 21 übertragen. Ziel ist dabei eine möglichst gleichmäßige Umfangskraftübertragung bzw. Lastverteilung im Bremshalter 21 zu erreichen. Dazu sind die drei Bremshalterarme 23 in axialem Abstand zum Basisabschnitt, insbesondere an ihren dem Basisabschnitt 22 abgewandten Enden, mittels eines Stegs 30 verbunden. Dies führt zu einer Steifigkeitserhöhung des Bremshalters 21 und somit zu einer Reduzierung der Verformung der Bremshalterarme 23 infolge Bremsumfangslast. Aufgrund unterschiedlicher Hebelarme an der inneren 26 bzw. äußeren Bremsbelagabstützzone 27 besteht an Bremshalterarmen 23 unter Umfanglast grundsätzlich die Tendenz zu verschieden starken Verformungen an der inneren und der äußeren Bremsbelagabstützzone 26, 27. Dies äußert sich in einer unerwünschten Schiefstellung der Bremsbeläge 16, 17 bzw. der Bremsgehäuse 20 gegenüber der Bremsscheibe. Zur Verhinderung dieses Effekts ist zwischen den Befestigungsbereichen 24 jeweils ein Freiraum 29 ausgebildet, so dass der Basisabschnitt 22, zwei Bremshalterarme 23 und der Steg 30 jeweils eine rahmenförmige Struktur bilden die zwischen den Befestigungsbereichen 24 geöffnet ist. D. h. zumindest zwei in Umfangsrichtung benachbarte Befestigungsbereiche 24 sind ausschließlich über die Bremshalterarme 23 sowie den Steg 30 mit einer Materialverbindung versehen. Dadurch wird die Elastizität der axial innenliegenden Bremsbelagabstützzonen 26 erhöht, woraus unter Umfangslast eine im wesentlichen parallele Verschiebung der Bremsbeläge 16, 17 folgt. Die Bremshaltergestaltung mit Steg 30 und Freiraum zwischen den Befestigungsbereichen 24 zum fahrzeugfesten Bauteil unterbindet damit in erheblichem Maße die unerwünschte Schiefstellung der Bremsbeläge 16, 17. Dabei wird eine Bremshalterausführung hoher Steifigkeit erreicht, die unter anderem die Bauteilsteifigkeit eines zugehörigen fahrzeugfesten Radträgers oder Achsschenkels ausnutzt. Gleichermaßen besitzt ein derartiger Bremshalter 21 nur ein geringes Bauteilgewicht.

Am Bremshalter 21 nach den Figuren 2 und 3 sind außerdem noch zwei Bremsgehäuse 20 verschiebbar gelagert. In diesem Zusammenhang sind am Basisabschnitt 22 Löcher 31 vorgesehen zur Befestigung von Bolzenführungen 32, die jeweils zwischen dem Bremshalter 21 und dem Bremsgehäuse 20 wirksam sind. Die erfindungsgemäße Gestaltung des Bremshalters 21, die eine aufgrund einer Steifigkeitserhöhung eine Reduzierung belastungsspezifischer Verformungen und damit einer Bremsbelagschiefstellung bewirkt, äußert sich außerdem in einer verbesserten Führung der Bremsgehäuse 20. Wie bei den Bremsbelägen 16, 17 wird auch für die Bremsgehäuse 20 eine Schiefstellung unter Bremsumfangslast verhindert bzw. in erheblichem Maße reduziert. Neben der in Figur 2 gezeigten Ausführungsform der Teilbelagscheibenbremse 18 ist selbstverständlich ebenso möglich an einem Bremshalter 21 mit drei oder mehr Bremshalterarmen 23 nur ein einziges Bremsgehäuse 20 anzuordnen, das mehrere Abschnitte mit jeweils zumindest einer Betätigungsvorrichtung 33 aufweist.

Eine zusätzliche Steifigkeitserhöhung für den Bremshalter 21 ergibt sich bei starrer Anbindung der Befestigungsbereiche 24 an den fahrzeugfesten Radträger oder Achsschenkel. Dabei ist für den Bremshalter 21 in Einbaulage am Kraftfahrzeug eine mögliche Verdrehung der Befestigungsbereiche 24 um die Achse der Durchgangslöcher 34 zu unterbinden. Dies lässt sich beispielsweise durch verdrehfeste Anbindung der Befestigungsbereiche 24 erreichen. Ein weitere Alternative besteht in einer unterschiedlichen Ausrichtung der Befestigungsbereiche 24 bei der Verschraubung am fahrzeugfesten Radträger oder Achsschenkel. So ist es denkbar die Verschraubung des Bremshalters 21, bezogen auf die Bremsscheibenachse, mit radialer bzw. tangentialer Ausrichtung vorzunehmen.

Die in den Figuren dargestellten Varianten von Bremshaltern 1, 21 besitzen zwei bzw. drei Bremshalterarme 3, 23 sowie in entsprechender Anzahl Befestigungsbereiche 24. Die erfindungsgemäße Gestaltung eines Bremshalters 1, 21 lässt sich jedoch auch auf Bremshalterausführungen mit mehr als drei Bremshalterarmen 3, 23 sowie Befestigungsbereichen 24 ausdehnen. Dies gilt im gleichen Zuge auch für den Einsatz mehrerer Bremsgehäuse 20. Dabei ist es weder notwendig alle Paare von in Umfangsrichtung benachbarten Bremshalterarme 23 mit einem Steg 30 zu verbinden bzw. alle Paare von in Umfangsrichtung benachbarten Befestigungsbereichen 24 mit einem dazwischen liegenden Freiraum 29 zu versehen. Vielmehr sind zumindest zwei einander benachbarte Bremshalterarme 23 mit einem Steg 30 verbunden und zumindest zwei einander benachbarte Befestigungsbereiche 24 sind dazwischenliegend mit einem Freiraum 29 ausgestattet. Eine vorteilhafte nicht gezeigte Weiterbildung des Bremshalters 21 nach den Figuren 2, 3 entsteht durch Aneinanderreihung von einem ersten Paar benachbarter Bremshalterarme 23, die mit einem Steg 30 verbunden sind und deren zugehöriges Paar von Befestigungsbereichen 24 mit einem Freiraum 29 versehen ist, mit einem zweiten Paar benachbarter Bremshalterarme 23, die ausschließlich über einen zwischen dem zugehörigen Paar von Befestigungsbereichen 24 durchgängigen Basisabschnitt 22 verbunden sind und die keinen Verbindungssteg 30 aufweisen. Derartige Paare von Bremshalterarmen 23 können in beliebiger Anzahl aneinandergereiht werden und ergeben in gewisser Weise eine alternierende Struktur des gesamten Bremshalters 21.

## Patentansprüche

1. Bremshalter (1, 21) für eine Teilbelagscheibenbremse (18), die einen fahrzeugfest angeordneten Bremshalter (1, 21), beiderseits einer zugehörigen Bremsscheibe angeordnete Bremsbeläge (16, 17) und zumindest ein die Bremsscheibe sowie die Bremsbeläge (16, 17) umgreifendes Bremsgehäuse (20) aufweist, mit einem Basisabschnitt (2, 22), mit zumindest zwei im wesentlichen rechtwinklig zum Basisabschnitt (2, 22) verlaufenden Bremshalterarmen (3, 23), zur verschiebbaren Aufnahme von Bremsbelägen (16, 17) der Teilbelagscheibenbremse (18) und mit mindestens zwei Befestigungsbereichen (4, 24) zur lösbaren fahrzeugfesten Befestigung des Bremshalters (1, 21), **dadurch gekennzeichnet, dass** zumindest zwei Bremshalterarme (3, 23) in Abstand zum Basisabschnitt (2, 22) durch wenigstens einen Steg (10, 30) miteinander verbunden sind und dass der Basisabschnitt (2, 22) zwischen zumindest zwei Befestigungsbereichen (4, 24) einen Freiraum (9, 29) aufweist.

2. Bremshalter (1, 21) nach Anspruch 1, **dadurch gekennzeichnet, dass** der Bremshalter (1, 21) zumindest drei Bremshalterarme (23) aufweist und dass alle Bremshalterarme (23) im Abstand zum Basisabschnitt (22) durch einen Steg (30) miteinander verbunden sind.

3. Bremshalter (1, 21) nach einem der vorhergehenden Ansprüche, **dadurch gekennzeichnet, dass** der Bremshalter (1, 21) zumindest drei Befestigungsbereiche (24) aufweist und dass jeweils zwischen zwei Befestigungsbereichen (24) ein Freiraum (29) ausgebildet ist.

4. Bremshalter (1, 21) nach einem der vorhergehenden Ansprüche, **dadurch gekennzeichnet, dass** die Befestigungsbereiche (4, 24) in einem hinreichenden Abstand unterhalb einer Verbindungslinie zwischen jeweils zwei Bremshalterarmen (3, 23) angeordnet sind.

5. Bremshalter (1, 21) nach einem der vorhergehenden Ansprüche, **dadurch gekennzeichnet, dass** der die Bremshalterarme (3, 23) verbindende Steg (10, 30) mit an die Belastung angepassten Materialausnehmungen versehen ist.

6. Bremshalter (1, 21) nach Anspruch 5, **dadurch gekennzeichnet, dass** die Materialausnehmungen derart angeordnet sind, dass sich eine fachwerkartige Struktur ergibt.

## Claims

1. Brake support (1, 21) for a spot-type disc brake (18) which has a brake support (1, 21) which is arranged so as to be fixed with respect to the vehicle, brake linings (16, 17) which are arranged at both sides of an associated brake disc, and at least one brake housing (20) which engages over the brake disc and the brake linings (16, 17), having a base section (2, 22), having at least two brake holder arms (3, 23), which run substantially at right angles with respect to the base section (2, 22), for holding brake linings (16, 17) of the spot-type disc brake (18) in a movable fashion, and having at least two fastening regions (4, 24) for detachably fastening the brake support (1, 21) so as to be fixed with respect to the vehicle, **characterized in that** at least two brake support arms (3, 23) are connected to one another at a distance from the base section (2, 22) by at least one web (10, 30), and **in that** the base section (2, 22) has a clearance (9, 29) between at least two fastening regions (4, 24).

2. Brake support (1, 21) according to Claim 1, **characterized in that** the brake support (1, 21) has at least three brake support arms (23) and **in that** all the brake support arms (23) are connected to one another at a distance from the base section (22) by means of a web (30).

3. Brake support (1, 21) according to one of the preceding claims, **characterized in that** the brake support (1, 21) has at least three fastening regions (24) and **in that** a clearance (29) is formed in each case between two fastening regions (24).

4. Brake support (1, 21) according to one of the preceding claims, **characterized in that** the fastening regions (4, 24) are arranged at a sufficient distance below a connecting line between in each case two brake support arms (3, 23).

5. Brake support (1, 21) according to one of the preceding claims, **characterized in that** the web (10, 30) which connects the brake support arms (3, 23) is provided with material recesses which are adapted to the loading.

6. Brake support (1, 21) according to Claim 5, **characterized in that** the material recesses are arranged so as to generate a framework-like structure.

## Revendications

1. Support de frein (1, 21) pour un frein à disque à garniture partielle (18), qui présente un support de frein (1, 21) disposé de manière fixe par rapport au véhicule, des garnitures de frein (16, 17) disposées de part et d'autre d'un disque de frein associé et au moins un boîtier de frein (20) venant en prise autour du disque de frein et des garnitures de frein (16, 17), avec une portion de base (2, 22), avec au moins deux bras de support de frein (3, 23) s'étendant essentiellement à angle droit par rapport à la portion de base (2, 22), pour recevoir de manière déplaçable des garnitures de frein (16, 17) du frein à disque à garniture partielle (18) et avec au moins deux régions de fixation (4, 24) pour la fixation détachable, fixée au véhicule, du support de frein (1, 21), **caractérisé en ce qu'**au moins deux bras de support de frein (3, 23) sont connectés l'un à l'autre à distance de la portion de base (2, 22) par au moins une nervure (10, 30) et **en ce que** la portion de base (2, 22) présente un espace libre (9, 29) entre au moins deux régions de fixation (4, 24).

2. Support de frein (1, 21) selon la revendication 1, **caractérisé en ce que** le support de frein (1, 21) présente au moins trois bras de support de frein (23) et **en ce que** tous les bras de support de frein (23) sont connectés les uns aux autres à distance de la portion de base (22) par une nervure (30).

3. Support de frein (1, 21) selon l'une quelconque des revendications précédentes, **caractérisé en ce que** le support de frein (1, 21) présente au moins trois régions de fixation (24) et **en ce qu'**un espace libre (29) est à chaque fois réalisé entre deux régions de fixation (24).

4. Support de frein (1, 21) selon l'une quelconque des revendications précédentes, **caractérisé en ce que** les régions de fixation (4, 24) sont disposées à une distance suffisante en dessous d'une ligne de connexion entre deux bras de support de frein respectifs (3, 23).

5. Support de frein (1, 21) selon l'une quelconque des revendications précédentes, **caractérisé en ce que** la nervure (10, 30) reliant les bras de support de frein (3, 23) est pourvue d'évidements de matière adaptés à la contrainte.

6. Support de frein (1, 21) selon la revendication 5, **caractérisé en ce que** les évidements de matière sont disposés de telle sorte qu'il en résulte une structure de type ossature.
